# EUROPEAN PATENT SPECIFICATION

(11) **EP 2 392 871 B1**
(45) Date of publication and mention of the grant of the patent: **09.01.2019**
(21) Application number: 10735628.9
(22) Date of filing: 26.01.2010
(51) Int. Cl.: B01D 46/42

(54) **Air conditioning indoor unit equipped with a filter cleaning device**
Inneneinheit einer Klimaanlage mit Filterreinigungseinheit
Unité de conditionnement d'air intéreur avec und dispositif de nettoyage de filtre

(30) Priority: 28.01.2009 JP 2009017050; 05.10.2009 JP 2009231871
(43) Date of publication of application: 07.12.2011
(73) Proprietor: Daikin Industries, Ltd., Osaka 530-8323 (JP)
(72) Inventor: TADA, Hiroyuki, Kusatsu-shi Shiga 525-8526 (JP); AKAI, Tatsuhiko, Kusatsu-shi Shiga 525-8526 (JP); YAMASHITA, Tetsuya, Kusatsu-shi Shiga 525-8526 (JP); OKAMOTO, Takahiro, Kusatsu-shi Shiga 525-8526 (JP)
(74) Representative: Hoffmann Eitle
(86) International application number: PCT/JP2010/000439
(87) International publication number: WO 2010/087156

(56) References cited:
- JP-A- 1 023 036
- JP-A- 1 023 036
- JP-A- 5 187 654
- JP-A- 6 114 224
- JP-A- 10 066 847
- JP-A- 10 066 847
- JP-A- 2005 127 645
- JP-A- 2005 127 645
- JP-A- 2007 100 975
- JP-A- 2007 303 771
- JP-A- 2008 029 912
- JP-A- 2008 029 912
- JP-A- 2008 057 883
- JP-A- 2008 057 883
- US-A- 3 717 978

## Description

### TECHNICAL FIELD

The present invention relates to an air conditioning indoor unit and particularly relates to an air conditioning indoor unit equipped with a filter cleaning device that automatically removes dirt and dust adhered to a filter and a method of manufacturing the filter cleaning device.

### BACKGROUND ART

Air conditioning indoor units are, as described in patent citation 1 (JP-A No. 6-114224) and patent citation 2 (JP-A No. 5-187654) for example, equipped with a filter cleaning device in which a filter formed in a loop shape is placed on an upwind side of an indoor heat exchanger and which causes the filter to revolve and removes dirt and dust adhered to the filter.

US 3,717,978 discloses a system for filtering and cleaning air or gas streams, wherein an endless foraminous belt is trained over spaced-apart rollers, including drive roller having bristle-type belt-engaging elements and is moved across the path of flow of an air or gas stream by means of a water-driven turbine having its drive shaft connected to the drive roller and having its water exhaust stream directed to effect washing of particulate matter from the belt.

### SUMMARY OF THE INVENTION

### <Technical Problem>

However, the filter used in the filter cleaning device of patent citation 1 is made of metal, so it is less flexible compared to a resin filter and it is also less mechanically durable with respect to repetitive revolving motion. On the other hand, the resin filter of patent citation 2 is highly flexible, but slippage occurs between the shaft that drives the resin filter and the resin filter, and there is the potential for the motive force of the shaft to not be reliably transmitted.

It is an object of the present invention to provide an air conditioning indoor unit equipped with a filter cleaning device that can reliably actuate a filter at the time of filter cleaning.

### <Solution to the Problem>

An air conditioning indoor unit according to a first aspect of the invention is an air conditioning indoor unit equipped with a filter cleaning device that actuates a filter placed on an upwind side of an indoor heat exchanger and removes dirt and dust adhered to the filter, wherein the filter is formed in a loop shape. The filter cleaning device has a first roller and a drive component. The first roller has a brush material on its surface and rotates in a state where the surface is in contact with the filter. The drive component causes the first roller to rotate. Moreover, the filter cleaning device further has a support frame that supports the filter at least from inside. The support frame has a handgrip in a predetermined position oil the opposite side of the indoor heat exchanger side. As a result of the handgrip being pulled in a direction away from the body, the filter cleaning device or at least the support frame is detached from the body.

In this air conditioning indoor unit, the user can detach the filter cleaning device or at least the frame from the body by using the handgrip, so maintainability improves.

In this air conditioning indoor unit, the brush material eats into the mesh of the filter, raises the frictional force, and suppresses slippage between the first roller surface and the filter, so the performance of transmitting motive force to the filter rises.

An air conditioning indoor unit according to a preferred embodiment of the invention is the air conditioning indoor unit according to the first aspect of the invention, wherein a pile woven textile base cloth is pasted onto the surface of the first roller.

In this air conditioning indoor unit, the pile threads eat into the mesh of the filter and raise the frictional force. As a result, slippage between the first roller surface and the filter is suppressed, and the performance of transmitting motive force to the filter rises. Further, the pile woven textile vase cloth simply pasting onto the surface of the first roller gives the first roller high performance in motive force transmission, resulting in high productivity.

An air conditioning indoor unit according to a preferred embodiment of the invention is the air conditioning indoor unit according to the first aspect of the invention, wherein the shape of the first roller is a cylindrical shape. Further, a pile woven textile base cloth is attached spirally from a central portion of an outer peripheral face of the first roller toward both ends with the helical direction opposite a rotating direction of the first roller.

In this air conditioning indoor unit, the right half of the filter contacting the outer peripheral face of the first roller is pulled to the right, the left half is pulled to the left, and the right half and the left half are balanced, so the filter is suppressed from becoming unbalanced toward one end of the first roller.

An air conditioning indoor unit according to a preferred embodiment of the invention is the air conditioning indoor unit according to the first aspect of the invention, wherein a bristle material of a bristle brush is pasted onto the surface of the first roller.

In this air conditioning indoor unit, the bristle material eats into the mesh of the filter and raises the frictional force. As a result, slippage between the first roller surface and the filter is suppressed, and the performance of transmitting motive force to the filter rises.

An air conditioning indoor unit according to a preferred embodiment of the invention is the air conditioning indoor unit according to the first aspect of the invention, wherein the support frame includes the first roller, a second roller, and a partition member. The first roller is supported such that it may freely rotate and forms a first curved section of the filter. The second roller is supported such that it may freely rotate and forms a second curved section of the filter farthest away from the first roller. The partition member is positioned between the first roller and the second roller and is intervened in a gap formed by opposing faces of the filter. The drive component causes at least one of the first roller and the second roller to rotate.

In this air conditioning indoor unit, even when the opposing faces of the filter have trembled during the revolving action, the opposing faces of the filter are prevented from interfering with each other because the partition member is intervened between them.

An air conditioning indoor unit according to a preferred embodiment of the invention is the air conditioning indoor unit described previously, wherein a pile woven textile base cloth is pasted onto the surface of at least one of the first roller and the second roller.

In this air conditioning indoor unit, the pile threads eat into the mesh of the filter and raise the frictional force. As a result, slippage between the roller surface on the drive side and the filter is suppressed, and the performance of transmitting motive force to the filter rises. An air conditioning indoor unit according to a preferred embodiment of the invention is the air conditioning indoor unit according to the first aspect of the invention, wherein the filter comprises a ventilation portion and a reinforcement portion. In the ventilation portion, the mesh is woven into a predetermined size in order to remove dirt and dust. In the reinforcement portion, the mesh is more tightly woven than that of the ventilation portion.

In this air conditioning indoor unit, the filter is partially tightly woven, whereby the rigidity of that part, rises, so the filter is reinforced.

An air conditioning indoor unit according to a preferred embodiment of the invention is the air conditioning indoor unit described previously, wherein the reinforcement portion of the filter is at least woven on both end portions extending parallel to a conveyance direction of the filter. In this air conditioning indoor unit, both end portions of the filter are tightly woven, whereby unraveling from the end faces of the mesh is prevented.

An air conditioning indoor unit according to a preferred embodiment of the invention is the air conditioning indoor unit described previously, wherein the support frame directly contacts the reinforcement portion of the filter and supports the filter. In this air conditioning indoor unit, the mesh of the reinforcement portion is tight, so the reinforcement portion is durable with respect to sliding friction with the support frame, and unraveling is prevented.

An air conditioning indoor unit according to a preferred embodiment of the invention is the air conditioning indoor unit described previously, wherein the support frame includes a vertical crosspiece extending parallel to the conveyance direction of the filter. The reinforcement portion of the filter is further woven in a position facing the vertical crosspiece.

In this air conditioning indoor unit, the reinforcement portion is unsuited for ventilation because the mesh of the reinforcement portion is tightly woven, but because the position facing the vertical crosspiece of the support frame is a part where ventilation is originally impeded by the vertical crosspiece, so even when that part is tightly woven, this does not lower the performance of the filter.

An air conditioning indoor unit according to a preferred embodiment is the air conditioning indoor unit described previously, wherein the reinforcement portion of the filter is woven perpendicular to a conveyance direction of the filter.

In this air conditioning indoor unit, tension does not act on the filter in the direction perpendicular to the conveyance direction, so it is easy for both end portions of the filter to move toward the central side and wrinkle, but if the reinforcement portion is woven perpendicular to the conveyance direction of the filter, the reinforcement portion can stop central movement of both end portions.

Preferably, the filter is formed in a loop shape as a result of both end portions of a band-like filter material being joined together, and the support frame that becomes an orbit of the revolution is inserted inside the loop shape.

In this embodiment, the shape of the filter is maintained by the support frame, so borders or ribs for reinforcement become unnecessary in the filter. As a result, the conventional problem of borders or ribs getting caught on another member and stopping is eliminated.

Preferably, both end portions of the band-like filter material are joined together by sewing.

In this embodiment, a projection caused by a seam and knots arises in the joined portion, but the height of that projection is kept low. As a result, the joined portion is suppressed from getting caught on another member during the revolving action of the filter, and the reliability of the action rises.

Preferably, both end portions of the band-like filter material are joined together by thermal bonding.

In this embodiment, a special joining member is not used, so a projection does not arise in the joined portion. As a result, the joined portion is suppressed from getting caught on another member during the revolving action of the filter, and the reliability of the action rises.

Preferably, the filter is formed in a loop shape as a result of a tubular filter material being cut, and a support frame that becomes an orbit of the revolution is inserted inside the loop shape.

In this embodiment, there is no joined portion, so the filter is further suppressed from getting caught on another member during the revolving action, and the reliability of the action rises.

Preferably, the filter is woven in a loop shape or is knitted in a loop shape, and a support frame that becomes an orbit of the revolution is inserted inside the loop shape.

In this filter cleaning device manufacturing method, there is no joined portion, so the filter is further suppressed from getting caught on another member during the revolving action, and the reliability of the action rises.

### <Advantageous Effects of the Invention>

In the air conditioning indoor unit according to the first aspect of the invention, the brush material eats into the mesh of the filter, raises the frictional force, and suppresses slippage between the roller surface and the filter, so the performance of transmitting motive force to the filter rises.

The user can detach the filter cleaning device or at least the frame from the body by using the handgrip, so maintainability improves.

According to a preferred embodiment, slippage between the roller surface and the filter is suppressed, and the performance of transmitting motive force to the filter rises. Further, simply by virtue of the pile woven textile base cloth being pasted onto the surface of the roller, a roller whose motive force transmission performance is high is completed, so productivity is high.

According to a preferred embodiment, the right half of the filter contacting the outer peripheral face of the roller is pulled to the right, the left half is pulled to the left, and the right half and the left half are balanced, so the filter is suppressed from becoming unbalanced toward one end of the roller.

According to a preferred embodiment, the bristle material eats into the mesh of the filter and raises the frictional force. As a result, slippage between the roller surface and the filter is suppressed, and the performance of transmitting motive force to the filter rises.

According to a preferred embodiment, the opposing faces of the filter are prevented from interfering with each other because the partition member is intervened between them.

According to a preferred embodiment, slippage between the roller surface on the driving side and the filter is suppressed, and the performance of transmitting motive force to the filter rises.

According to a preferred embodiment, the filter is partially tightly woven, whereby the rigidity of that part rises, so the filter is reinforced.

According to a preferred embodiment, both end portions of the filter are tightly woven, whereby unraveling from the end faces of the mesh is prevented.

According to a preferred embodiment, the mesh of the reinforcement portion is tight, so the reinforcement portion is durable with respect to sliding friction with the support frame, and unraveling is prevented.

According to a preferred embodiment, the reinforcement portion is unsuited for ventilation because the mesh of the reinforcement portion is tightly woven, but because the position facing the vertical crosspiece of the support frame is a part where ventilation is originally impeded by the vertical crosspiece, so even when that part is tightly woven, this does not lower the performance of the filter.

According to a preferred embodiment, tension does not act on the filter in the direction perpendicular to the conveyance direction, so it is easy for both end portions of the filter to move toward the central side and wrinkle, but if the reinforcement portion is woven perpendicular to the conveyance direction of the filter, the reinforcement portion can stop central movement of both end portions.

According to a preferred embodiment, the filter is partially tightly woven, whereby the rigidity of that part rises, so the filter is reinforced.

According to a preferred embodiment, the conventional problem of borders or ribs getting caught on another member and stopping is eliminated.

According to a preferred embodiment, the joined portion is suppressed from getting caught on another member during the revolving action of the filter, and the reliability of the action rises.

According to a preferred embodiment, there is no joined portion, so the filter is further suppressed from getting caught on another member during the revolving action, and the reliability of the action rises.

### BRIEF DESCRIPTION OF THE DRAWINGS

FIG. 1 is a cross-sectional view of an air conditioning indoor unit according to a first embodiment of the present invention.
FIG. 2 is an exploded perspective view of a filter cleaning device.
FIG. 3 is a cross-sectional view of the filter cleaning device.
FIG. 4 is a cross-sectional view when a support frame is cut along a central axis of rotation of a first roller.
FIG. 5(a) is a perspective view of a first roller used in an air conditioning indoor unit according to a first modification, and FIG. 5(b) is a perspective view of another first roller used in the air conditioning indoor unit according to the first modification.
FIG. 6 is a perspective view of a first roller used in an air conditioning indoor unit according to a second modification.
FIG. 7(a) is a perspective view of a first roller and a filter used in an air conditioning indoor unit according to a third modification, and FIG. 7(b) is a perspective view of another first roller and another filter used in the air conditioning indoor unit according to the third modification.
FIG. 8 is a cross-sectional view of an air conditioning indoor unit according to a second embodiment of the present invention.
FIG. 9 is a perspective view when a filter supported on a first roller and a second roller is cut along an axis of rotation of the first roller.
FIG. 10 is a cross-sectional view showing the inside of a forming die for forming a filter and a guide ring.
FIG. 11 is a perspective view of a filter cleaning device of an air conditioning indoor unit according to a third embodiment of the present invention.
FIG. 12 is an exploded perspective view of the filter cleaning device of FIG. 11.
FIG. 13 is a cross-sectional view of the filter cleaning device when point A in FIG. 11 is cut by a plane parallel to a traveling direction of a filter.
FIG. 14(a) is a partial perspective view of a second support frame before a regulating member is released, and FIG. 14(b) is a partial perspective view of the second support frame after the regulating member has been released.
FIG. 15(a) is a perspective view of a filter in which reinforcement portions are woven on both ends, FIG. 15(b) is a perspective view of a filter in which reinforcement portions are woven in positions facing vertical crosspieces, and FIG. 15(c) is a perspective view of a filter in which reinforcement portions are woven perpendicular to a conveyance direction.

### DESCRIPTION OF THE EMBODIMENTS

Embodiments of the present invention will be described below with reference to the drawings. The embodiments below are specific examples of the present invention and are not intended to limit the technical scope of the present invention.

### <First Embodiment

### <Air Conditioning Indoor Unit 2>

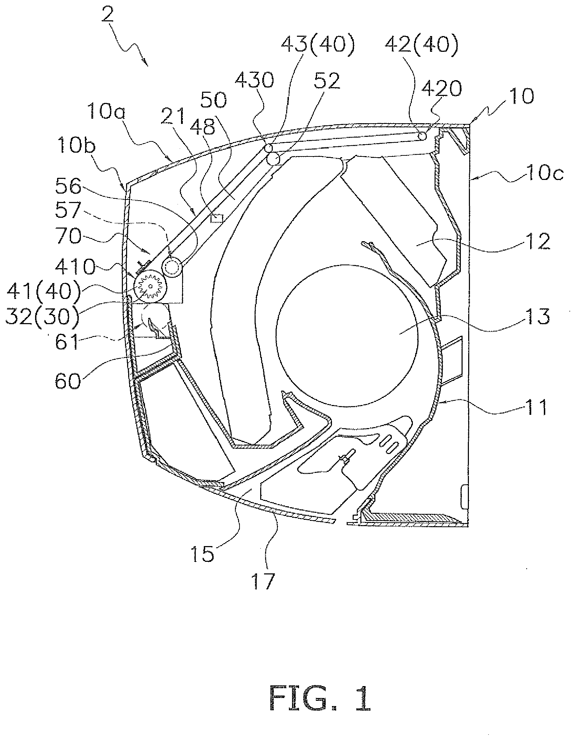

FIG. 1 is a cross-sectional view of an air conditioning indoor unit according to a first embodiment of the present invention. In FIG. 1, the enclosure of a body 10 is configured by a grille 10a, a front panel 10b, and a rear plate 10c. A frame 11, an indoor heat exchanger 12, a fan 13, and a filter 21 are placed inside the body 10.

The indoor heat exchanger 12 and the fan 13 are attached to the frame 11. The indoor heat exchanger 12 performs heat exchange with air passing through it. The fan 13 applies air that has been taken in from a room to the indoor heat exchanger 12, causes the air to pass through the indoor heat exchanger 12, and thereafter blows out the air into the room.

A blow-out port 15 is disposed in the lower portion of the front face of the frame 11, and a horizontal flap 17 that guides the air blown out from the blow-out port 15 is disposed in the blow-out port 15. The horizontal flap 17 can change the blow-out direction of the air and can open and close the blow-out port 15.

The filter 21 is placed between the grille 10a and the indoor heat exchanger 12 and removes dirt and dust included in the air flowing in toward the indoor heat exchanger 12. Further, the air conditioning indoor unit 2 is equipped with a filter cleaning device 70 that automatically cleans the filter 21 to which dirt and dust have adhered. Members associated with the filter cleaning device will be described below using the drawings.

### <Filter Cleaning Device 70>

### (Filter 21)

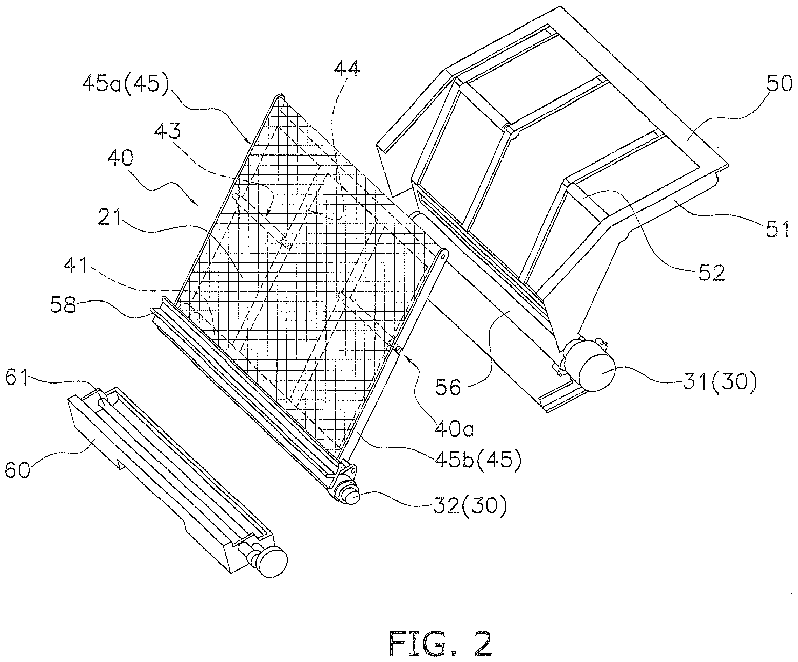

FIG. 2 is an exploded perspective view of the filter cleaning device. In FIG. 2, the filter 21 is a net plain woven from resin threads, for example, and is formed in a loop shape. The weave of the filter 21 is not limited to a plain weave and may also be another weave such as a twill weave. Borders or ribs for reinforcement like those seen in general filters are not disposed in the filter 21. For this reason, the filter 21 cannot maintain a stable shape by itself, so a support frame 40 supports the filter 21 and forms a predetermined loop shape in the filter 21.

### (Support Frame 40)

In FIG. 1 and FIG. 2, the support frame 40 has a first roller 41, a second roller 42, and third rollers 43. The first roller 41 and the second roller 42 support the filter 21 from inside such that the filter 21 becomes a long and narrow loop. When the filter 21 becomes a long and narrow loop, there is the potential for its closest opposing faces to contact each other, so the third rollers 43 are placed between the first roller 41 and the second roller 42. As a result, the filter 21 can form a loop shape having a first curved face forming section 410, a second curved face forming section 420, and a third curved face forming section 430.

The first roller 41 is positioned lower than the second roller 42 and the third rollers 43, and its outer diameter is larger than the outer diameters of the second roller 42 and the third rollers 43. The outer diameter of the first roller 41 is governed by the configuration of the embodiment, so it is not necessarily the case that it is invariably larger than the outer diameters of the second roller 42 and the third rollers 43; ;in a case where it is easier for the filter 21 to revolve as the outer diameter of the second roller 42 becomes larger, then it is also possible to make the outer diameter of the second roller 42 larger than the outer diameters of the first roller 41 and the third rollers 43. Likewise, it is also possible to make the outer diameter of the third rollers 43 larger than the outer diameters of the first roller 41 and the second roller 42. A pile woven textile base cloth is pasted onto the outer peripheral face of the first roller 41. Pile weaving is a method in which short fibers (pile threads) are woven so as to stand on the surface, and specifically the cloth part of a clothes brush that removes waste threads and cotton dust adhered to clothing and so forth corresponds thereto.

The pile threads standing on the outer peripheral face of the first roller 41 enter the mesh of the filter 21, so it becomes difficult for slippage to occur between the first roller 41 and the filter 21. As a result, by causing the first roller 41 to rotate, the filter 21 can revolve along the support frame 40.

The support frame 40 further has a coupling member 45. The coupling member 45 separates and positions the first roller 41, the second roller 42, and the third rollers 43 at predetermined intervals apart from each other and supports those rollers such that they may freely rotate. The outside ends of the third rollers 43 are supported by the coupling member 45, but the inside ends are supported by a partition member 44. Like the third rollers 43, the partition member 44 prevents the closest opposing faces of the filter 21 from interfering with each other.

The coupling member 45 has a joint portion 40a at which the coupling member 45 is bent in the neighborhood of the position where it supports the third rollers. The support frame 40 is attached to a second support frame 50 in a state where the support frame 40 is bent at the joint portion 40a.

### (Filter Sensing Sensors 48)

In FIG. 1, filter sensing sensors 48 are placed in the neighborhoods of both end portions of the filter 21 in the direction of its axis of revolution. As long as the filter sensing sensors 48 can sense changes in the relative positions of the support frame 40 and the filter 21, the filter sensing sensors 48 may be either a type that contacts the filter 21 or a type that does not contact the filter 21. In the present embodiment, limit switches is employed.

### (Second Support Frame 50)

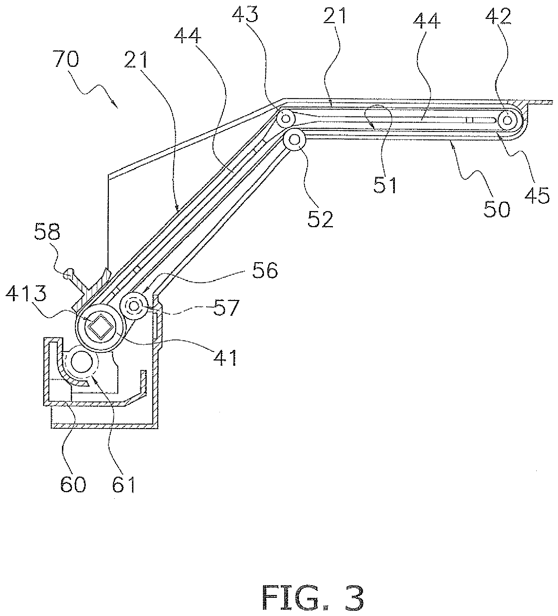

FIG. 3 is a cross-sectional view of the filter cleaning device. In FIG. 2 and FIG. 3, the second support frame 50 has an accommodating portion 51, and the coupling member 45 of the support frame 40 is inserted into the accommodating portion 51. The accommodating portion 51 has a shape in which it is bent in the vicinity of its center, and when the coupling member 45 is inserted into the accommodating portion 51, the bent part corresponds to the joint portion 40a of the coupling member 45.

The second support frame 50 further has support rollers 52. The support rollers 52 are attached, such that they may freely rotate, to the bent part of the second support frame 50. When the support frame 40 is held in the second support frame 50 via the coupling member 45, the support rollers 52 contact the filter 21 from the indoor heat exchanger 12 side. When the support frame 40 is bent, the face of the filter 21 on the indoor heat exchanger 12 side sags downward, but the support rollers 52 prevent that face from sagging.

However, the support rollers 52 only prevent the filter 21 from sagging and cannot eliminate slack in the filter 21. Therefore, the filter cleaning device 70 has a filter pressing roller 56 in order to eliminate slack in the filter 21.

### (Filter Pressing Roller 56)

The filter pressing roller 56 is attached, such that it may freely rotate, to the lower portion of the second support frame 50. When the coupling member 45 of the support frame 40 is inserted into the accommodating portion 51 of the second support frame 50, the filter pressing roller 56 awaits the filter 21 from the indoor heat exchanger 12 side, and the filter 21 strikes the filter pressing roller 56 and then further moves toward the indoor heat exchanger 12. As a result, the filter pressing roller 56 presses the filter 21 in the direction away from the indoor heat exchanger 12, and slack decreases in accordance with the pressed amount.

### (Torque Limiter 57)

A torque limiter 57 is attached on the axis of rotation of the filter pressing roller 56. When the filter 21 revolves, a rotational force arises in the filter pressing roller 56 because of a frictional force between the filter pressing roller 56 and the filter 21. When the rotational force is smaller than a set value of the torque limiter 57, the filter pressing roller 56 cannot rotate, but when the rotational force exceeds the set value of the torque limiter 57, the filter pressing roller 56 rotates. As a result, even if the filter 21 has a little slack between itself and the support frame 40 when the filter 21 is stopped, constant tension acts on the filter 21 when the filter 21 revolves. Conversely, tension does not act on the filter 21 while the filter 21 is stopped, so there is the effect that stress is alleviated and the mechanical life of the filter 21 is extended.

### (Handgrip 58)

A handgrip 58 is attached to the support frame 40 and is positioned on the opposite side of the first roller 41 across the filter 21. The user can remove the support frame 40 from the second support frame 50 by opening the front panel 10b of the air conditioning indoor unit 2 and pulling on the handgrip 58.

It is also possible to couple the handgrip 58 to both the support frame 40 and the second support frame 50 such that the support frame 40 and the second support frame 50 are pulled out.

### (Drive Motor 31)

A drive motor 31 is a stepping motor, is attached to a side face of the lower portion of the accommodating portion 51, and causes the first roller 41 to rotate via a drive gear 32. The drive gear 32 is attached to an axis-of-rotation end portion of the first roller 41 and meshes with an output gear (not shown) of the drive motor 31 when the support frame 40 is held in the second support frame 50.

### (Dust Box 60 and Brush 61)

A brush 61 is a brush for filter cleaning and opposes the first roller 41 across the filter 21 in order to scrape off dirt and dust adhered to the filter 21. The brush 61 has a shape in which a resin bristle material is pasted onto a cylindrical core, and the brush 61 is rotated in the opposite direction of the revolving direction of the filter 21 by a second drive motor (not shown). The method of manufacturing the brush 61 is not limited to only a method where the bristle material is pasted onto the cylindrical core and may also be another method. For example, the method may also be one where the bristle material is directly transplanted into the cylindrical core.

Dirt and dust scraped off of the filter 21 by the brush 61 collect inside a dust box 60 positioned under the brush 61. The dust box 60 can be removed from the body 10, so when a sufficient amount of dirt and dust have collected inside the dust box 60, the user detaches the dust box 60 from the body 10 and discards the dirt and dust.

The brush 61 is attached, such that it may freely rotate, in an open portion of the dust box 60, and when the user has removed the dust box 60 from the body 10, the brush 61 is also removed together, so the user can perform maintenance of the brush 61 when cleaning the dust box 60.

### (Method of Assembling Support Frame 40 and First Roller 41)

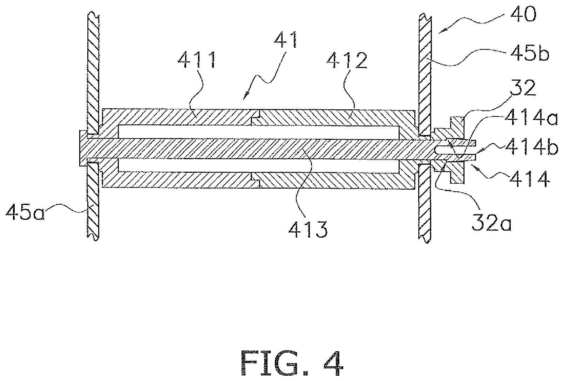

FIG. 4 is a cross-sectional view when the support frame is cut along a central axis of rotation of the first roller. In FIG. 4, the first roller 41 and the drive gear 32 are attached to the support frame 40 by a coupling shaft 413. Shaft holes that the coupling shaft 413 penetrates are disposed in the first roller 41, the coupling member 45 of the support frame 40, and the drive gear 32. For convenience of description, in a case where the coupling member 45 on one side of the support frame 40 is denoted as a first coupling member 45a and the coupling member 45 on the other side is denoted as a second coupling member 45b, the assembly worker need only insert the coupling shaft 413 in the order of the first coupling member 45a, the first roller 41, the second coupling member 45b, and the drive gear 32.

Further, a claw 414a that projects in the radial direction and a slit 414b that is cut in the axial direction into an end face are disposed on an end portion of the coupling shaft 413. The claw 414a is formed such that its diameter becomes larger in the central direction from the distal end, and its largest dimension is slightly larger than the diameters of the shaft holes in the coupling member 45, the first roller 41, and the drive gear 32, but when it is inserted into those, the claw 414a bends toward the slit 414b, so insertion is not impeded.

Additionally, when the claw 414a has been inserted into the drive gear 32, the maximum diameter part of the claw 414a fits into a recessed portion 32a of the drive gear 32, so the drive gear 32 does not come off of the coupling shaft 413. That is, the claw 414a and the slit 414b configure a lock mechanism 414. When it is to be disassembled, the claw 414a is pinched toward the slit 414b, the drive gear 32 is taken off of the coupling shaft 413, and the other members are also taken off of the coupling shaft 413 by the same method.

Further, the first roller 41 is divisible into a first small roller 411 and a second small roller 412. That is, the assembly of the first roller 41 is completed as a result of the coupling shaft 413 being inserted in order into the first coupling member 45a, the first small roller 411, the second small roller 412, the second coupling member 45b, and the drive gear 32. The opposing end faces of the first small roller 411 and the second small roller 412 fit together by a combination of a concavity and a convexity, so the first small roller 411 and the second small roller 412 do not shift position in the radial direction.

A D-cut is made in at least the parts of the coupling shaft 413 that fit together with the first roller 41 and the drive gear 32 in order to prevent spinning.

### (Method of Manufacturing Filter 21)

As for the filter 21, first a band-like filter is produced, and the lengthwise direction end portions of that band-like filter are joined together so that the filter is formed in a loop shape. Sewing or thermal bonding is selected as the joining method. With the former, the joined portion is sewn together with slender threads, whereby the height of concavo-convexities in the joined portion is suppressed, so the revolving action of the filter 21 is not hindered. With the latter, the joined portion is smoothly finished, so the revolving action of the filter 21 becomes smoother than with the former.

Further, as another method of manufacturing the filter 21, there is also a method of knitting the filter directly into a loop shape with threads of the same material as the filter 21. In this case, there is no joined portion in the filter 21, so the revolving action of the filter 21 becomes even smoother. Moreover, there is also a method of cutting a filter material formed in a roll into the necessary width. In this case also, there is no joined portion in the filter 21, so the revolving action of the filter 21 is smooth.

### (Filter Cleaning Operation)

The air conditioning indoor unit 2 has, built into the body 10, a controller (not shown) that controls the filter cleaning device 70. The controller counts the operating time of the air conditioning indoor unit 2, and when the cumulative operating time from the previous filter cleaning operation has reached a predetermined time (e.g., 18 hours), the controller causes the filter 21 to revolve a predetermined number of times (e.g., 1 time) while causing the brush 61 to rotate.

During that time, the brush 61 and the filter 21 relatively move, so the bristle material of the brush 61 enters the mesh of the filter 21 and scrapes out dirt and dust filling the mesh. The dirt and dust collect inside the dust box 60 positioned under the brush 61. The air conditioning indoor unit 2 according to the present embodiment can also forcibly execute the filter cleaning operation using a remote controller (not shown).

The revolving speed of the filter 21 is a low speed (e.g., the amount of time required for one revolving action is about 3 minutes), so the filter 21 does not become extremely unbalanced on either its left or right end, but in order to suppress the accumulation of slight imbalance, after the filter cleaning operation has ended, the filter cleaning device 70 may also cause the filter 21 to revolve in the opposite direction of the direction at the time of cleaning to correct that imbalance. Moreover, it is preferable to attach the filter sensing sensors 48 in the neighborhoods of both ends of the filter 21 like in the present embodiment and for the filter sensing sensors 48 to monitor imbalance in the filter 21.

For example, when the filter sensing sensors 48 have sensed imbalance in the filter 21 in the direction of its axis of revolution after cleaning of the filter 21 ends, the filter cleaning device 70 causes the filter 21 to revolve in the opposite direction (hereinafter called a second direction) of the direction at the time of cleaning (hereinafter called a first direction) to correct the imbalance. Moreover, the filter cleaning device 70 may also repeat a predetermined number of times the action of causing the filter 21 to revolve in the first direction and thereafter causing the filter 21 to revolve in the second direction. The reason is because, when reversal of the revolving direction of the filter 21 is repeated, imbalance is corrected while deviation of the filter 21 in the direction of its axis of revolution is finely adjusted. Moreover, when the filter cleaning device 70 causes the filter 21 to revolve in the second direction, the filter cleaning device 70 may also cause the filter 21 to revolve faster than the speed when it causes the filter 21 to revolve in the first direction. The revolving time of the filter 21 becomes shorter, so the time in which an operation sound occurs also becomes shorter by that much.

As one example, the revolving speed of the filter 21 in the second direction may be controlled so as to become quadruple the revolving speed in the first direction. Further, in order to lower noise at the time of revolution, it is also possible for the filter 21 to be controlled such that it revolves in the second direction while intermittently coming to a standstill.

There is the potential for the brush 61 to reversely rotate following the revolving action of the filter 21 in the second direction and for dirt and dust adhered to the brush 61 to again adhere to the filter 21. However, by making the revolving speed of the filter 21 in the second direction faster than the revolving speed in the first direction, the brush 61 becomes unable to follow the revolving action of the filter 21, so dirt and dust on the brush 61 are prevented from re-adhered to the filter 21.

Further, there are measures for preventing positional shifting of the filter 21 other than those described above, and specific measures will be described in a first modification, a second modification, and a third modification. Because these are modifications, the names and reference signs of each part will be identical to those in the above embodiment.

### <First Modification>

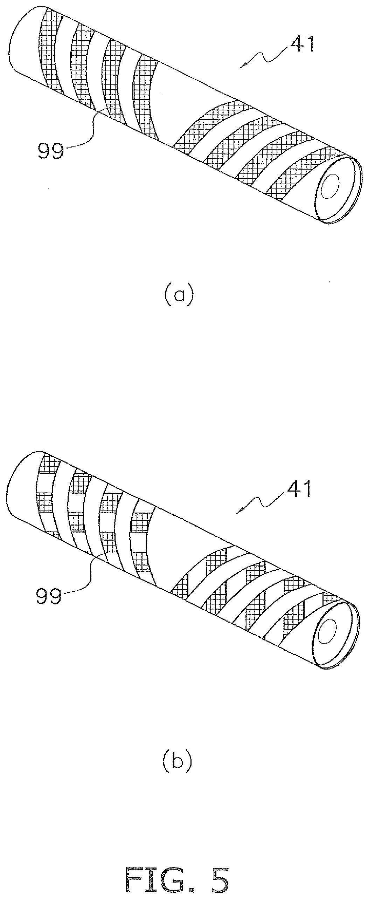

FIG. 5(a) is a perspective view of a first roller used in an air conditioning indoor unit according to a first modification, and FIG. 5(b) is a perspective view of another first roller used in the air conditioning indoor unit according to the first modification. In FIG. 5(a), bands of a pile woven textile base cloth 99 are pasted on spirally from the central portion of the first roller 41 toward both ends. The circling direction of the spirals is the opposite of the rotating direction of the first roller 41.

In the first modification, when the first roller 41 rotates, the bands pull the filter 21 from its central portion toward both of its end portions. As a result, tension acts substantially evenly on the right and left sides of the filter 21, and the filter 21 is prevented from becoming unbalanced on either one end of the first roller 41. Further, the pile woven textile base cloth 99 does not need to be in bands; as shown in FIG. 5(b), pieces of the pile woven textile base cloth 99 may also be scattered spirally.

### <Second Modification>

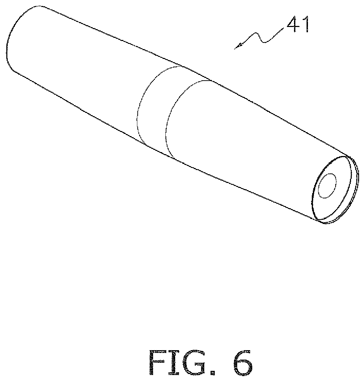

FIG. 6 is a perspective view of a first roller used in an air conditioning indoor unit according to a second modification. In FIG. 6, the first roller 41 is formed such that the diameter of its central portion becomes larger than the diameter of both of its end portions. When the first roller 41 rotates, the circumferential speed of its central portion is faster than the circumferential speed of both of its end portions, and the centrifugal force acting on the center of the filter 21 is larger than the centrifugal force acting on both end portions. As a result, the filter 21 is pulled on the central portion and is prevented from becoming unbalanced toward either one end portion.

### <Third Modification>

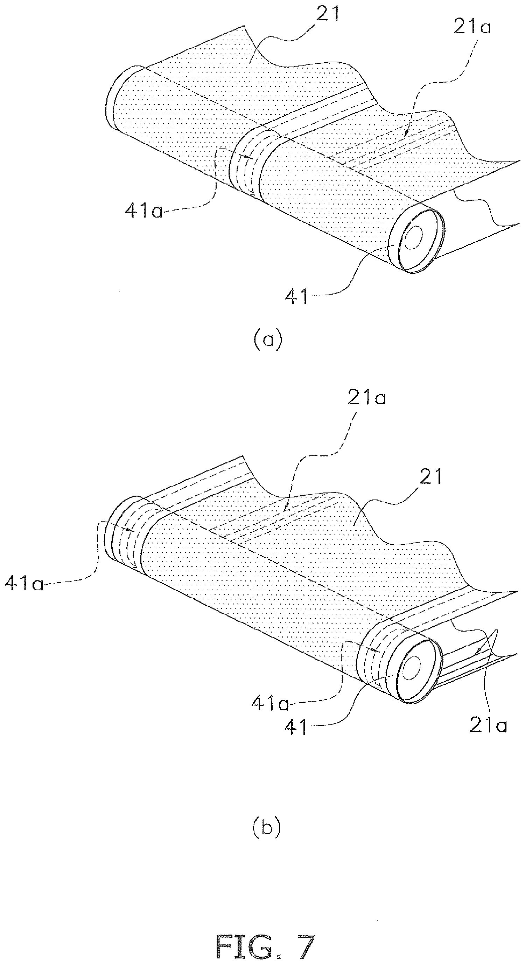

FIG. 7(a) is a perspective view of a first roller and a filter used in an air conditioning indoor unit according to a third modification, and FIG. 7(b) is a perspective view of another first roller and another filter used in the air conditioning indoor unit according to the third modification. In FIG. 7(a), a groove 41a that encircles the outer periphery of the first roller 41 is formed in the central portion of the first roller 41. A guide ring 21a is attached to the central portion of the filter 21 so as to encircle the inner periphery of the filter 21. The guide ring 21a is formed by an elastic material such as an elastomer and may be integrally formed with the filter 21. When the filter 21 is attached to the support frame 40, the guide ring 21a fits into the groove 41a. As a result, when the first roller 41 rotates, the filter 21 is prevented from becoming unbalanced toward either one end portion of the first roller 41 because the guide ring 21a of the filter 21 fits into the groove.

Further, the place where the groove 41a is formed in the first roller 41 may be not only in the central portion of the first roller 41 but also in both end portions of the first roller 41 as shown in FIG. 7(b), and the guide ring 21a may also be disposed on both end portions of the filter 21 in correspondence thereto.

### (Measure for Preventing Unraveling of Filter 21)

Because borders like a conventional filter has are not disposed on the filter 21, it is preferable to heat the ends of the filter 21 and bond the threads of the material so that the filter 21 does not unravel from its ends. Further, another measure for preventing unraveling will be described in a fourth modification below.

### <Fourth Modification

The loop-shaped filter 21 has the potential to unravel from its width direction ends, so bias tape for sewing is attached to those ends. In the case of the type of filter 21 in which a band-like filter material is joined together, bias tape for sewing is first attached to the band-like filter material, and thereafter both lengthwise direction ends of the band-like filter material are joined together.

In the case of the filter 21 that is knitted in a loop shape or in the case of the filter 21 that is cut from a roll-like filter material, bias tape for sewing is directly attached to the open ends of the loop shape (the ends in the width direction).

### <Characteristics>

(1) In the air conditioning indoor unit 2, the filter 21 is maintained in a predetermined loop shape by the support frame 40, so borders and ribs for reinforcement can be done away with.
(2) In the air conditioning indoor unit 2, the filter pressing roller 56 eliminates slack that arises when the filter 21 is bent, so the filter 21 becomes placed along the bent shape of the indoor heat exchanger 12. Further, the torque limiter 57 is connected on the axis of rotation of the filter pressing roller 56, so stable tension is applied at the time of the revolving action of the filter 21.
(3) In the air conditioning indoor unit 2, the faces of the filter 21 are prevented from interfering with each other by the third rollers 43 and the partition member 44.
(4) In the air conditioning indoor unit 2, the first roller 41 is divisible, and maintenance of the first roller 41 and the filter 21 is easy.
(5) In the air conditioning indoor unit 2, the pile threads on the surface of the first roller 41 eat into the mesh of the filter 21, raise the frictional force, and suppress slippage between the first roller 41 surface and the filter 21, so the performance of transmitting motive force to the filter 21 rises.
(6) In the air conditioning indoor unit 2, the support frame 40 is detached from the body 10 as a result of the handgrip 58 being pulled in the direction away from the body 10, so maintainability is good.
(7) In the air conditioning indoor unit 2, the filter cleaning device 70 causes the filter 21 to revolve in the first direction when cleaning the filter 21 and, when the filter sensing sensors 48 have sensed imbalance of the filter 21 in the direction of its axis of revolution after cleaning of the filter 21 ends, the filter cleaning device 70 causes the filter 21 to revolve in the second direction opposite the first direction to correct imbalance.

### <Second Embodiment

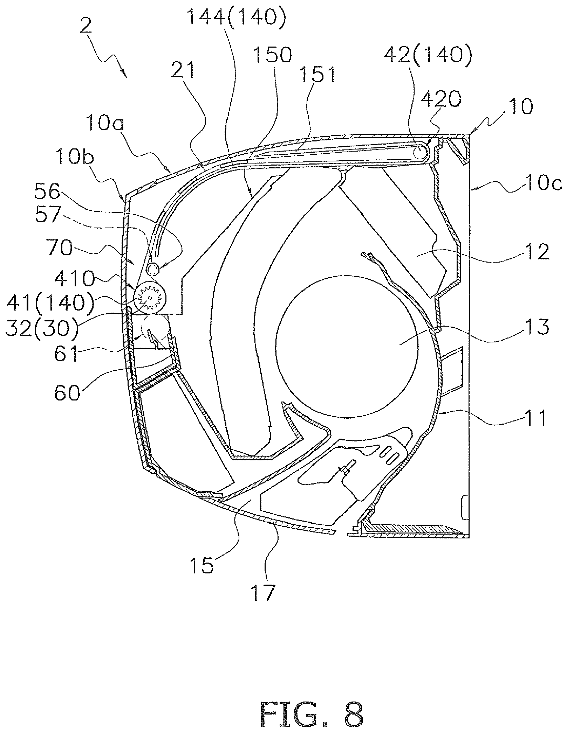

A second embodiment of the present invention will be described below using the drawings. The same names and reference signs will be used for parts that are the same as those in the first embodiment, and detailed description will be omitted. FIG. 8 is a cross-sectional view of an air conditioning indoor unit according to the second embodiment of the present invention. In FIG. 8, a support frame 140 supports the filter 21 with the first roller 41, the second roller 42, and a curved portion partition plate 144. The filter 21 has a shape in which its long and narrow loop is smoothly curved, and the filter 21 revolves while maintaining that loop shape because of the rotation of the first roller 41.

A second support frame 150 has an accommodating portion 151 in order to hold the support frame 140 such that the support frame 140 may be freely attached and detached. The accommodating portion 151 accommodates the support frame 140 so as to not hinder the revolving action of the filter 21.

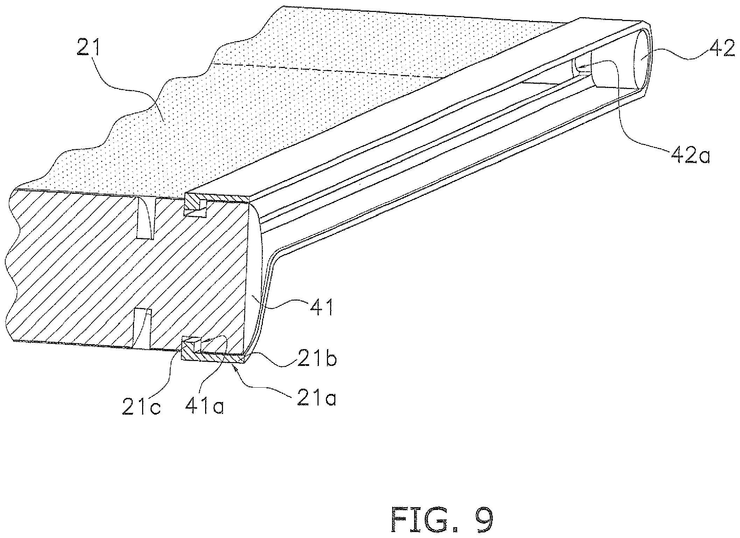

FIG. 9 is a perspective view when the filter supported on the first roller and the second roller is cut along the axis of rotation of the first roller. In FIG. 9, a guide ring 21a is fixed to an end portion of the filter 21 in the direction of its axis of revolution. The guide ring 21a has a belt portion 21b that is parallel to the axis of revolution of the filter 21 and a convex portion 21c that projects perpendicularly from the belt portion 21b.

The first roller 41 has a groove 41a, and the convex portion 21c of the guide ring 21a fits into the groove 41a. The second roller 42 also has a groove 42a, and the convex portion 21c of the guide ring 21a fits into the groove 42a. Therefore, when the filter 21 revolves, the convex portion 21c of the guide ring 21a fits into the groove 41a in the first roller 41 and the groove 42a in the second roller 42, so the filter 21 is prevented from becoming unbalanced toward its ends in the direction of its axis of revolution.

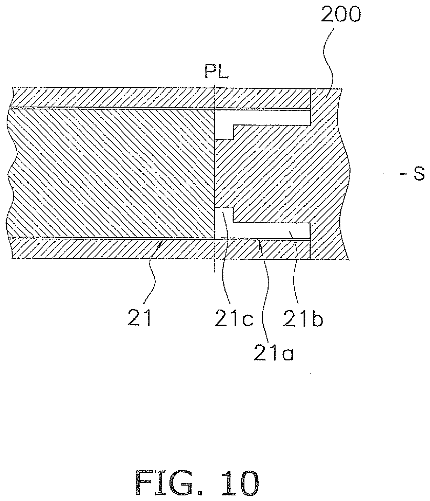

The guide ring 21a is adhered to the filter 21 after being formed in a predetermined shape, but in addition to this, the guide ring 21a can also be formed directly on the filter 21 by injection molding. In this case, the configuration of the filter 21 and the guide ring 21a may also be given the configuration shown in FIG. 10. FIG. 10 is a cross-sectional view showing the inside of a forming die for forming a filter and a guide ring. In FIG. 10, the hatched area is a die and the L-shaped white area is a space in which the guide ring 21a is formed. After the guide ring 21a has been formed on the end portion of the filter 21, a die 200 moves in the S direction. The end face of the convex portion 21c is on a parting line (PL) and consideration is given to ensure that there is no undercut with respect to the movement of the die 200 in the S direction.

### <Third Embodiment

### (Filter Cleaning Device 270)

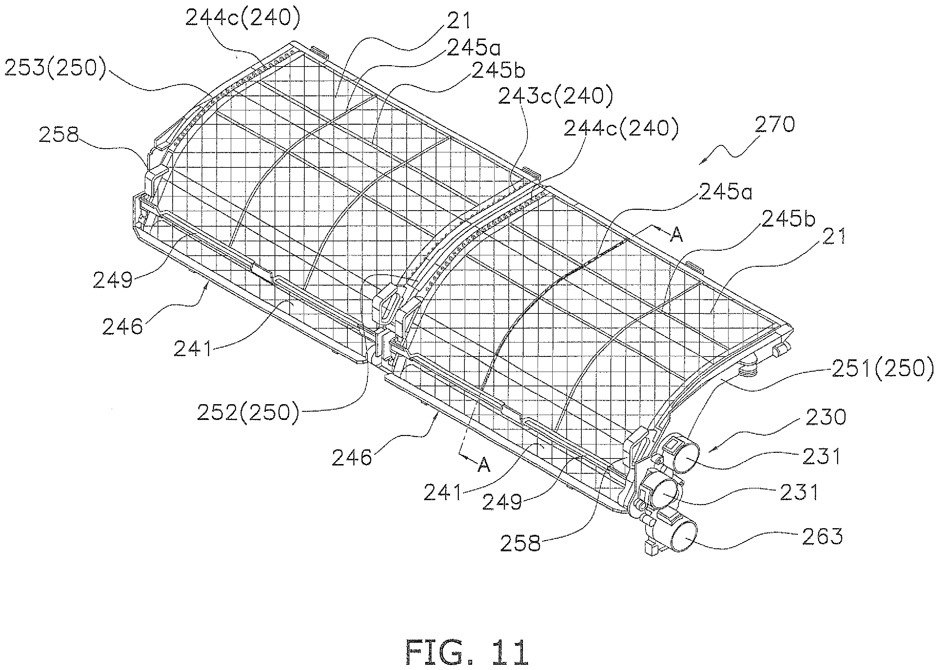

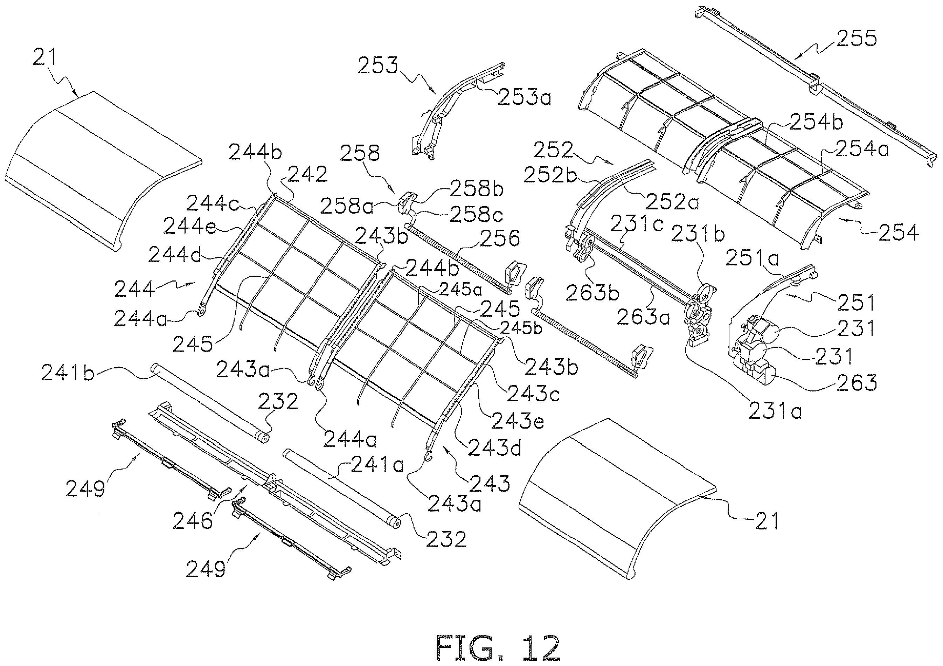

FIG. 11 is a perspective view of a filter cleaning device of an air conditioning indoor unit according to a third embodiment of the present invention. FIG. 12 is an exploded perspective view of the filter cleaning device of FIG. 11. In FIG. 11 and FIG. 12, a filter cleaning device 270 has support frames 240 that directly support filters 21 and a second support frame 250 that directly supports the support frames 240.

### (Support Frames 240)

Each of the support frames 240 includes a first support plate 243, a second support plate 244, and multiple reinforcement rods 245. The first support plate 243 and the second support plate 244 are coupled together apart from and parallel to each other by the reinforcement rods 245 such that their mutual end faces face each other. The first support plate 243 has, on one lengthwise direction end thereof, a first bearing 243a that supports the axis of rotation of a roller 241. The first bearing 243a is ring-shaped, but part of the ring is cut out.

Like the first support plate 243, the second support plate 244 also has, on one lengthwise direction end thereof, a second bearing 244a that supports the axis of rotation of the roller 241. The second bearing 244a is annular but has no cut-out like the first bearing 243a.

The reason is because a roller gear 232 is fixed to one axis-of-rotation end of the roller 241 and the addendum circle diameter of the roller gear 232 is larger than the diameter of the roller 241, so insertion of that one axis-of-direction end of the roller 241 from the axial direction is impossible, but because the other axis-of-direction end of the roller 241 does not have the roller gear 232, insertion of that other axis-of-direction end of the roller 241 from the axial direction is possible. Accordingly, the end part of the axis-of-rotation of the roller 241 on its side without the roller gear 232 is inserted into the second bearing 244a, and thereafter, the other end part of the axis-of-rotation having the roller gear 232 is inserted from the cut-out in the first bearing 243a.

The other end of the first support plate 243 that is, a terminal end 243b on the opposite side of the first bearing 243a is a directional turnaround portion at which the loop-shaped filter 21 reverses its traveling direction, so the end face of the terminal end 243b is finished to a smoothly curved face. Likewise, the other end of the second support plate 244 that is, a terminal end 244b on the opposite side of the second bearing 244a-is also a directional turnaround portion at which the loop-shaped filter 21 reverses its traveling direction, so the end face of the terminal end 244b is finished to a smoothly curved face.

The first support plate 243 has, in the substantial center of its plate width, multiple first projections 243c lined up along its lengthwise direction. Likewise, the second support plate 244 has, in the substantial center of its plate width, multiple second projections 244c lined up along its lengthwise direction. The shortest distance from the first projections 243c to the second projections 244c is set to be a little larger than the width of the filter 21. Consequently, when the loop-shaped filter 21 has been looped around the support frame 240, the end faces of the filter 21 face the first projections 243c and the second projections 244c.

The part of the first support plate 243 on which the neighborhood of the end face of the filter 21 rests will be called a first filter receiving portion 243d, and the part of the first support plate 243 on the opposite side of the first filter receiving portion 243d across the first projections 243c will be called a first guide portion 243e. Likewise, the part of the second support plate 244 on which the neighborhood of the end face of the filter 21 rests will be called a second filter receiving portion 244d, and the part of the second support plate 244 on the opposite side of the second filter receiving portion 244d across the second projections 244c will be called a second guide portion 244e.

The multiple first projections 243c are lined up at regular intervals in the direction from the terminal end 243b to the first bearing 243a but break off a certain distance before the first bearing 243a. Further, the first guide portion 243e that extends alongside the first projections 243c also becomes a terminal end face at a position where the line of the first projections 243c breaks off. That is, a first cut-out portion 243f is formed between the terminal end face of the first guide portion 243e and the first bearing 243a.

Likewise, the multiple second projections 244c are lined up at regular intervals in the direction from the terminal end 244b to the second bearing 244a but break off a certain distance before the second bearing 244a. Further, the second guide portion 244e that extends alongside the second projections 244c also becomes a terminal end face at a position where the line of the second projections 244c breaks off. That is, a second cut-out portion 244f is formed between the terminal end face of the second guide portion 244e and the second bearing 244a.

### (Handgrips 258)

Handgrips 258 are fitted into the first cut-out portion 243f and the second cut-out portion 244f and fixed. Each of the handgrips 258 has a handle 258a, a fixing portion 258b, and a roller holding portion 258c.

The fixing portions 258b form the root parts of the handles 258a and fit into the first cut-out portion 243f and the second cut-out portion 244f. The roller holding portions 258c hold a tension roller 256 that presses the filter 21 and prevents slack.

The handgrips 258 hold both ends of the tension roller 256, and the handgrips 258 come out to the front side through the first cut-out portion 243f and the second cut-out portion 244f from the rear side of the support frame 240 around which the filter 21 has been looped. When the fixing portions 258b of the handgrips 258 have been positioned in the first cut-out portion 243f and the second cut-out portion 244f, the tension roller 256 stops in a position where it has pressed the filter 21 toward the support frame 240. As a result, slack in the filter 21 is eliminated by the tension roller 256, and the filter 21 is supported so as to be capable of revolving on the support frame 240.

The side faces of the handles 258a are near and oppose both end faces of the filter 21, so when the filter 21 revolves around the support frame 240, both ends of the filter 21 are guided by the multiple first projections 243c, the multiple second projections 244c, and the handgrips 258, so meandering of the filter 21 is prevented.

The reinforcement rods 245 may be plate members or cylindrical members as long as they are rod-like, but the parts of the reinforcement rods 245 that the filter 21 contacts when the filter 21 has been looped around are smoothly finished. In particular, the reinforcement rod that interconnects the terminal end 243b of the first support plate 243 and the terminal end 244b of the second support plate 244 is a support member at which the filter 21 reverses its traveling direction, so for convenience of description it will be called a support rod 242 and distinguished from the reinforcement rods 245.

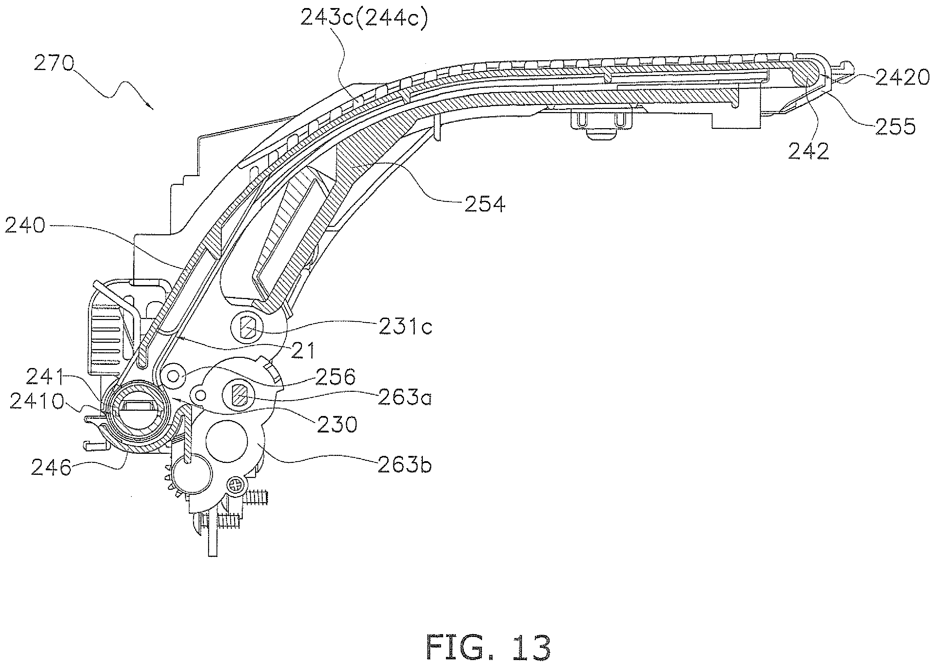

FIG. 13 is a cross-sectional view of the filter cleaning device when point A in FIG. 11 is cut by a plane parallel to the traveling direction of the filter. In FIG. 13, the roller 241 supports the filter 21 with a rotating curved face 2410, but the support rod 242 supports the filter 21 with a fixed curved face 2420 formed in a smooth circumferential face. Of course, it is also possible to configure the support rod 242 with a roller and support the filter 21 with a rotating curved face, but in that case, the structure increases in size because of the roller and a bearing and so forth.

Therefore, in the third embodiment, miniaturization is realized as a result of the support rod 240 supporting the filter 21 with the fixed curved face 2420. Further, the support rod 242 is integrally formed together with the first support plate 243, the second support plate 244, and the reinforcement rods 245, so the configuration is simple and the number of parts decreases. The reinforcement rods 245 form a grid with rods 245a that are parallel to the first support plate 243 and rods 245b that are orthogonal to the first support plate 243, and the reinforcement rods 245 ensure a constant strength.

### (Outside Crosspiece 246)

As shown in FIG. 13, an outside crosspiece 246 is near and faces the curved face of the filter 21 from the opposite side of the roller 241 across the filter 21. As for the part of the filter 21 that contacts the roller 241, the region that is pulled in the traveling direction and the region that is paid out in the traveling direction are adjacent, and in the region that is paid out, the potential for the tension acting on the filter 21 to drop and for the filter 21 to undulate is high.

However, because the outside crosspiece 246 is disposed, the undulating filter 21 contacts the outside crosspiece 246 before contacting another member, so even in a case where there is another movable member (e.g., the brush 61 of the first embodiment) in the neighborhood of the roller 241, the filter 21 is not bitten into.

### (Regulating Members 249)

In FIG. 11 and FIG. 12, regulating members 249 for preventing the support frames 240 from coming off of the second support frame 250 are disposed in the filter cleaning device 270.

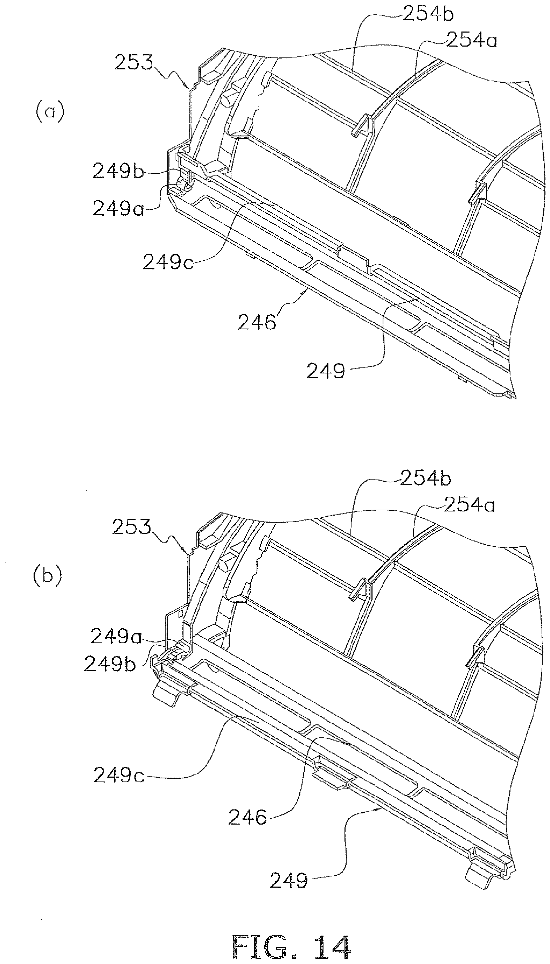

FIG. 14(a) is a partial perspective view of the second support frame before the regulating member is released, and FIG. 14(b) is a partial perspective view of the second support frame after the regulating member has been released. In FIG. 14(a) and FIG. 14(b), each of the regulating members 249 includes a hinge portion 249a, a hinge lever 249b, and a regulating lever 249c.

The hinge portion 249a is attached to the second support frame 250 so as to sandwich the support frame 240 and is placed in the neighborhood of the end face of the outside crosspiece 246. The hinge lever 249b interconnects the hinge portion 249a and the regulating lever 249c, and when the user swings the hinge lever 249b around the hinge portion 249a, the regulating lever 249c rotates while drawing a circular arc whose radius is the length of the hinge lever 249b.

The regulating lever 249c rotates as far as a position above the roller 241 and near the filter 21 (hereinafter called a regulating position) and stops. Further, the position at which the regulating lever 249c is farthest away from the regulating position is a release position, and the regulating lever 249c in the release position is positioned at the same height as or lower than the face of the outside crosspiece 246 facing the filter 21.

The user attaches the support frame 240 to the second support frame 250 and thereafter rotates the regulating lever 249c to the regulating position. Because of this, the support frame 240 becomes unable to move in the direction in which it is pulled out from the second support frame 250. Further, even if the attachment of the support frame 240 to the second support frame 250 is incomplete, the regulating lever 249c does not reach the regulating position when the user moves the regulating lever 249c to the regulating position, so the user can recognize that the support frame 240 is not completely attached.

### (Second Support Frame 250)

In FIG. 11 and FIG. 12, the second support frame 250 has a first side plate 251, a second side plate 252, a third side plate 253, reinforcement frames 254, and an end portion attachment plate 255. The first side plate 251, the second side plate 252, and the third side plate 253 are lined up at substantially equal intervals parallel to each other. The reinforcement frames 254 are attached between the first side plate 251 and the second side plate 252 and between the second side plate 252 and the third side plate 253. The end portion attachment plate 255 is attached to the terminal ends of the first side plate 251, the second side plate 252, and the third side plate 253 so as to cover the terminal ends.

A guide groove 251a that supports the first guide portion 243e of the support frame 240 is disposed in the first side plate 251. Further, three motors are attached to the side of the first side plate 251 without the guide groove 251a, a gear train is attached to the side with the guide groove 251a, and rotating shafts of the motors penetrate the first side plate 251 and are coupled to the gear train.

A guide groove 252a that supports the second guide portion 244a of the support frame 240 and a guide groove 252b that supports the first guide portion 243e of the support frame 240 are disposed in the second side plate 252. The guide groove 252a is disposed on the side facing the first side plate 251, and the guide groove 252b is disposed on the opposite side of the guide groove 252a. A guide groove 253a that supports the second guide portion 244e of the support frame 240 is disposed in the third side plate 253. The guide groove 253a faces the guide groove 252b in the second side plate.

The guide grooves 251a, 252a, 252b, and 253a are curved in quadratic curves, the depths of the grooves are depths deep enough for the first guide portions 243e and the second guide portions 244e to completely fit in the grooves, and the lengths of the grooves are shorter than the lengths of the first support plates 243 and the second support plates 244 and are substantially equal to the array length of the first projections 243c and the second projections 244c.

As shown in FIG. 12, of the three motors fixed to the first side plate 251, two motors are roller drive motors 231 that cause the rollers 241 to rotate, and the third motor is a brush drive motor 263 that causes a brush (not shown) to rotate. The brush drive motor 263 is placed under the two roller drive motors 231.

For convenience of description, the roller 241 supported on the first side plate 251 and the second side plate 252 will be called a right roller 241a, and the roller 241 supported on the second side plate 252 and the third side plate 253 will be called a left roller 241b. The roller drive motor 231 on the lower side makes the roller gear 232 of the right roller 241a rotate via a gear train 231a so as to rotate the right roller 241a. The roller drive motor 231 on the upper side makes the roller gear 232 of the left roller 241b rotate via a gear train 231b and an extension shaft 231c so as to rotate the left roller 241b. In this way, the rollers 241, the roller gears 232, and the roller drive motors 23 1 configure a drive mechanism 230.

The brush drive motor 263 causes a brush (not shown) to rotate via an extension shaft 263a and a gear train 263b.

In each of the reinforcement frames 254, a grid is formed by multiple coupling rods 254a along the traveling direction of the filters 21 and multiple reinforcement rods 254b perpendicular to the traveling direction of the filters 21, and constant strength is ensured. Additionally, parts having the potential to contact the filters 21 are finished to smoothly curved faces.

### (Attachment and Detachment of Support Frames 240)

The curvature of the support frames 240 around which the filters 21 have been looped is smaller compared to the second support frame 250, so the first guide portions 243e and the second guide portions 244e are inserted into the guide grooves 251a, 252a, 252b, and 253a in the second support frame 250 while causing the support frames 240 to curve. The multiple first projections 243c and the multiple second projections 244c of the support frames 240 are lined up at intervals, so it becomes easy for the first support plates 243 and the second support plates 244 to curve, and the support frames 240 are easily attached to the second support frame 250. In the case of removing the support frames 240 from the second support frame 250, the user grips and pulls on the handles 258a of the handgrips 258, whereby the support frames 240 are pulled out. Consequently, maintainability is good.

### <Characteristics of Third Embodiment

In the air conditioning indoor unit 2, each of the support frames 240 has the multiple first projections 243c and the multiple second projections 244c that are near and face both end faces of the filter 21 and are lined up at intervals along the revolving orbit of the filter 21. As a result, when the filter 21 revolves on its revolving orbit, both ends of the filter 21 are guided by the multiple first projections 243c and the multiple second projections 244c, so meandering of the filter 21 is prevented.

### <Modifications of Third Embodiment

Borders or reinforcement ribs like a conventional filter has are not disposed on the filters 21, so it is easy for the filters 21 to unravel at their width direction ends and it is also easy for the filters 21 to wrinkle. Therefore, in modifications of the third embodiment, unraveling and wrinkling are prevented as a result of the weave of the filters 21 being partially changed.

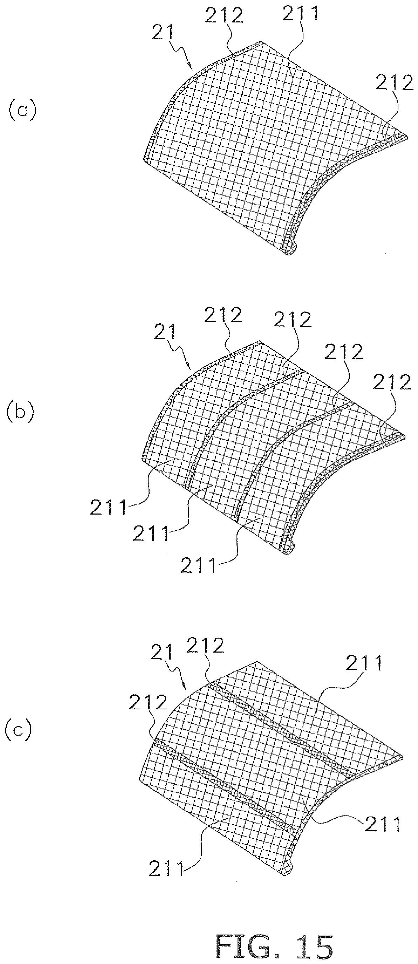

FIG. 15(a) is a perspective view of a filter in which reinforcement portions are woven on both ends, FIG. 15(b) is a perspective view of a filter in which reinforcement portions are woven in positions facing lengthwise crosspieces, and FIG. 15(c) is a perspective view of a filter in which reinforcement portions are woven perpendicular to the conveyance direction.

In FIG. 15(a), the filter 21 includes a ventilation portion 211 and reinforcement portions 212. In the ventilation portion 211, the mesh is woven into a predetermined size in order to remove dirt and dust. The reinforcement portions 212 are positioned on both end portions of the ventilation portion 211, and their mesh is more tightly woven than that of the ventilation portion 211. As a result, the rigidity of the reinforcement portions 212 becomes higher than that of the ventilation portion 211, and it is difficult for the filter to unravel.

"Both end portions of the ventilation portion 211" means both end portions extending parallel to the conveyance direction of the filters 21. The support frame 240 directly contacts the reinforcement portions 212 and supports the filters 21, but because the mesh of the reinforcement portions 212 is tight as described above, the reinforcement portions 212 are durable with respect to sliding friction with the support frame 240.

Further, it is not necessary for the reinforcement portions 212 to be limited to only both end portions of the filter 21; as shown in FIG. 15(b), the reinforcement portions 212 may also be woven in positions a predetermined dimension away from both ends of the filter. Positions facing the rods 245a that are vertical crosspieces of the support frame 240 are preferable. The reason is because the reinforcement portions 212 are unsuited for ventilation because the mesh of the reinforcement portions 212 is tightly woven, but because the positions facing the rods 245a of the support frame 240 are parts where ventilation is originally impeded by the rods 245a, even if those parts are tightly woven, this does not lower the performance of the filter 21.

Further, as shown in FIG. 15(c), the reinforcement portions 212 of the filter 21 may also be woven perpendicular to the conveyance direction of the filter 21. Tension does not act in the direction perpendicular to the conveyance direction of the filters 21, so it is easy for both end portions of the filter 21 to move toward the central side and wrinkle. However, if the reinforcement portions 212 are woven perpendicular to the conveyance direction of the filter 21, the reinforcement portions 212 stop central movement of both end portions.

The procedure where the filter 21 is reinforced as a result of the filter 21 being partially tightly woven is applicable to not just a loop-shaped filter but also a flat filter.

### <Other Embodiments>

In the first roller 41 in the first embodiment or the second embodiment and the roller 241 in the third embodiment, a pile woven textile base cloth (e.g., the brush part of an etiquette brush) is pasted onto the surface, and the pile threads enter the mesh of the filter 21, whereby it becomes difficult for slippage to occur between the rollers and the filter 21. This effect is not an effect limited to pile threads; the same effects are also obtained with a bristle brush.

For example, in a case where a bristle material of a bristle brush is pasted onto the surface of the roller 241, the bristle material eats into the mesh of the filter 21, so the driving force of the roller 241 is reliably transmitted to the filter 21. Further, the length from the roller surface to the bristle tips (hereinafter called the length of the bristle material) is long compared to pile threads, so even when dirt and dust have collected at the roots of the bristle material, the bristle material can eat into the mesh of the filter 21.

Further, it is not necessary for the lengths of the bristle material to all be uniform, and the lengths of some of the bristle material may also be longer than others. The reason is because there is obtained the effect that engagement of the bristle material with the filter 21 is also ensured while resistance when the bristle material eats into the mesh of the filter 21 is kept small.

### INDUSTRIAL APPLICABILITY

As described above, according to the present invention, the filter 21 comes to act smoothly, so the invention is useful in an air conditioning indoor unit with an automatic filter cleaning function.

### REFERENCE SIGNS LIST

- 2: Air Conditioning Indoor Unit
- 10: Body
- 12: Indoor Heat Exchanger
- 21: Filter
- 31, 231: Drive Motors
- 40, 240: Support Frames
- 41: First Roller
- 42: Second Roller
- 44: Partition Member
- 58, 258: Handgrips
- 70, 270: Filter Cleaning Devices
- 99: Textile Base Cloth
- 211: Ventilation Portion
- 212: Reinforcement Portion
- 241: Roller
- 245a: Vertical Crosspiece

### CITATION LIST

### <Patent Literature>

Patent Citation 1: JP-ANo. 6-114224
Patent Citation 2: JP-ANo. 5-187654

## Claims

1. An air conditioning indoor unit (2) equipped with a filter cleaning device (70, 270) that actuates a filter (21) placed on an upwind side of an indoor heat exchanger (12) and removes dirt and dust adhered to the filter (21),
wherein
the filter (21) is a filter formed in a loop shape, and
the filter cleaning device (70, 270) has
a first roller (41, 241) that rotates in a state where the surface is in contact with the filter (21) and
a drive component (31,231) that causes the first roller (41, 241) to rotate,
**characterized in that**
the first roller (41, 241) has a brush material on its surface, and wherein the filter cleaning device (70, 270) further has a support frame (40, 240) that supports the filter (21) at least from inside,
the support frame (40, 240) is disposed with a handgrip (58, 258) in a predetermined position on the opposite side of the indoor heat exchanger (12) side, and
by pulling the handgrip (58, 258) in a direction away from the body (10), the filter cleaning device (70, 270) or at least the support frame (40, 240) is detached from the body (10).

2. The air conditioning indoor unit (2) according to claim 1, wherein a pile woven textile base cloth (99) is pasted onto the surface of the first roller (41).

3. The air conditioning indoor unit (2) according to claim 1, wherein
the shape of the first roller (41) is a cylindrical shape, and
a pile woven textile base cloth (99) is attached spirally from a central portion of an outer peripheral face of the first roller (41) toward both ends and in the opposite direction of a rotating direction of the first roller (41).

4. The air conditioning indoor unit (2) according to claim 1, wherein a bristle material of a bristle brush is pasted onto the surface of the first roller (241).

5. The air conditioning indoor unit (2) according to claim 1, wherein
the support frame (40) includes
the first roller (41) that is supported such that it may freely rotate and forms a first curved section of the filter (21),
a second roller (42) that is supported such that it may freely rotate and forms a second curved section of the filter (21) farthest away from the first roller (41), and
a partition member (44) that is positioned between the first roller (41) and the second roller (42) and is intervened in a gap formed by opposing faces of the filter (21).

6. The air conditioning indoor unit (2) according to claim 5, wherein a pile woven textile base cloth (99) is pasted onto the surface of at least one of the first roller (41) and the second roller (42).

7. The air conditioning indoor unit (2) according to claim 1, wherein the filter (21) comprises a ventilation portion (211) whose mesh is woven into a predetermined size in order to remove dirt and dust and a reinforcement portion (212) whose mesh is more tightly woven than that of the ventilation portion (211).

8. The air conditioning indoor unit (2) according to claim 7, wherein the reinforcement portion (212) of the filter (21) is at least woven on both end portions extending parallel to a conveyance direction of the filter (21).

9. The air conditioning indoor unit (2) according to claim 8, wherein
the support frame (240) directly contacts the reinforcement portion (212) of the filter (21) and supports the filter (21).

10. The air conditioning indoor unit (2) according to claim 9, wherein
the support frame (240) includes a vertical crosspiece (245a) extending parallel to the conveyance direction of the filter (21), and
the reinforcement portion (212) of the filter (21) is further woven in a position facing the vertical crosspiece (245a).

11. The air conditioning indoor unit (2) according to claim 7, wherein the reinforcement portion (212) of the filter (21) is woven perpendicular to a conveyance direction of the filter (21).

12. The air conditioning unit (2) according to claim 1,
wherein the filter (21) is formed in a loop shape as a result of both end portions of a band-like filter material being joined together, and a support frame (40) that becomes an orbit of the revolution is inserted inside the loop shape.

13. The air conditioning unit (2) according to claim 12, wherein both end portions of the band-like filter material are joined together by sewing.

14. The air conditioning unit (2) according to claim 12, wherein both end portions of the band-like filter material are joined together by thermal bonding.

## Patentansprüche

1. Klimaanlage-Innenraumeinheit (2), ausgestattet mit einer Filterreinigungsvorrichtung (70, 270), die als ein Filter (21) wirkt, der an einer windwärtigen Seite eines Innenraum-Wärmetauschers (12) positioniert ist und am Filter (21) anhaftenden Schmutz und Staub entfernt,
wobei
der Filter (21) ein in einer Schleifenform gebildeter Filter ist, und
die Filterreinigungsvorrichtung (70, 270) aufweist
eine erste Rolle (41, 241), die in einem Zustand, in dem die Oberfläche mit dem Filter (21) in Berührung ist, dreht und
eine Antriebskomponente (31,231), die verursacht, dass die erste Rolle (41, 241) dreht,
**dadurch gekennzeichnet, dass**
die erste Rolle (41, 241) auf ihrer Oberfläche ein Bürstenmaterial aufweist, und wobei die Filterreinigungsvorrichtung (70, 270) weiter einen Halterahmen (40, 240) aufweist, der den Filter (21) mindestens von innen hält,
der Halterahmen (40, 240) mit einem Handgriff (58, 258) an einer vorbestimmten Position an der gegenüberliegenden Seite der Seite des Innenraum-Wärmetauschers (12) versehen ist, und
durch Ziehen des Handgriffs (58, 258) in eine Richtung vom Körper (10) weg die Filterreinigungsvorrichtung (70, 270) oder mindestens der Halterahmen (40, 240) vom Körper (10) gelöst wird.

2. Klimaanlage-Innenraumeinheit (2) nach Anspruch 1, wobei ein florgewobenes, textiles Grundgewebe (99) auf die Oberfläche der ersten Rolle (41) aufgeklebt ist.

3. Klimaanlage-Innenraumeinheit (2) nach Anspruch 1, wobei
die Form der ersten Rolle (41) eine zylindrische Form ist, und
ein florgewobenes, textiles Grundgewebe (99) spiralförmig von einer zentralen Portion einer äußeren Umfangsfläche der ersten Rolle (41) zu beiden Enden hin und in die entgegengesetzte Richtung der Drehrichtung der ersten Rolle (41) angebracht ist.

4. Klimaanlage-Innenraumeinheit (2) nach Anspruch 1, wobei ein Borstenmaterial einer Borstenbürste auf der Oberfläche der ersten Rolle (241) aufgeklebt ist.

5. Klimaanlage-Innenraumeinheit (2) nach Anspruch 1, wobei
der Halterahmen (40) enthält
die erste Rolle (41), die gehalten ist, sodass sie frei drehen kann und einen ersten gekrümmten Abschnitt des Filters (21) bildet,
eine zweite Rolle (42), die gehalten ist, sodass sie frei drehen kann und einen zweiten gekrümmten Abschnitt des Filters (21) am weitesten entfernt von der ersten Rolle (41) bildet, und
ein Unterteilungselement (44), das zwischen der ersten Rolle (41) und der zweiten Rolle (42) positioniert ist und in einer Spalte zwischenliegend ist, die durch gegenüberliegende Flächen des Filters (21) gebildet wird.

6. Klimaanlage-Innenraumeinheit (2) nach Anspruch 5, wobei ein florgewobenes, textiles Grundgewebe (99) auf der Oberfläche von mindestens einer der ersten Rolle (41) und der zweiten Rolle (42) aufgeklebt ist.

7. Klimaanlage-Innenraumeinheit (2) nach Anspruch 1, wobei der Filter (21) einen Belüftungsabschnitt (211) umfasst, dessen Maschen in einer vorbestimmten Größe gewoben sind, um Schmutz und Staub zu entfernen, und einen Verstärkungsabschnitt (212), dessen Maschen enger als die des Belüftungsabschnitts (211) gewoben sind.

8. Klimaanlage-Innenraumeinheit (2) nach Anspruch 7, wobei der Verstärkungsabschnitt (212) des Filters (21) mindestens an beiden Endabschnitten, die sich parallel zu einer Förderrichtung des Filters (21) erstrecken, gewoben ist.

9. Klimaanlage-Innenraumeinheit (2) nach Anspruch 8, wobei
der Halterahmen (240) direkt mit dem Verstärkungsabschnitt (212) des Filters (21) in Berührung ist und den Filter (21) hält.

10. Klimaanlage-Innenraumeinheit (2) nach Anspruch 9, wobei
der Halterahmen (240) ein vertikales Kreuzstück (245a) enthält, das sich parallel zur Förderrichtung des Filters (21) erstreckt, und
der Verstärkungsabschnitt (212) des Filters (21) weiter in einer zum vertikalen Kreuzstück (245a) gewendeten Position gewoben ist.

11. Klimaanlage-Innenraumeinheit (2) nach Anspruch 7, wobei der Verstärkungsabschnitt (212) des Filters (21) rechtwinklig zu einer Förderrichtung des Filters (21) gewoben ist.

12. Klimaanlageneinheit (2) nach Anspruch 1,
wobei der Filter (21) infolge dessen, dass beide Endabschnitte eines bandähnlichen Filtermaterials untereinander verbunden sind, in einer Schleifenform geformt ist, und ein Halterahmen (40), der zu einer Kreisbahn der Umdrehung wird, in die Schleifenform eingesetzt ist.

13. Klimaanlageneinheit (2) nach Anspruch 12, wobei beide Endabschnitte des bandähnlichen Filtermaterials durch Nähen miteinander verbunden sind.

14. Klimaanlageneinheit (2) nach Anspruch 12, wobei beide Endabschnitte des bandähnlichen Filtermaterials durch Thermosfusion untereinander verbunden sind.

## Revendications

1. Unité intérieure de climatisation (2) équipée d'un dispositif de nettoyage de filtre (70, 270) qui actionne un filtre (21) placé sur un côté au vent d'un échangeur de chaleur intérieur (12) et qui enlève la saleté et la poussière adhérées au filtre (21),
dans laquelle
le filtre (21) est un filtre formé en une forme de boucle, et
le dispositif de nettoyage de filtre (70, 270) comporte
un premier rouleau (41, 241) qui tourne dans un état où la surface est en contact avec le filtre (21), et
un composant d'entraînement (31, 231) qui amène le premier rouleau (41, 241) à tourner,
**caractérisée en ce que**
le premier rouleau (41, 241) a une matière de brosse sur sa surface et dans lequel le dispositif de nettoyage de filtre (70, 270) comporte en outre un châssis de support (40, 240) qui supporte le filtre (21) au moins à partir de l'intérieur,
le châssis de support (40, 240) est disposé avec une poignée (58, 258) dans une position prédéterminée sur le côté opposé du côté échangeur de chaleur intérieur (12), et
en tirant la poignée (58, 258) dans un sens l'écartant du corps (10), le dispositif de nettoyage de filtre (70, 270) ou au moins le châssis de support (40, 240) est détaché du corps (10).

2. Unité intérieure de climatisation (2) selon la revendication 1, dans laquelle un tissu à base de textile tissé velours (99) est collé sur la surface du premier rouleau (41).

3. Unité intérieure de climatisation (2) selon la revendication 1, dans laquelle
la forme du premier rouleau (41) est une forme cylindrique, et
un tissu à base de textile tissé velours (99) est attaché en spirale à partir d'une portion centrale d'une face périphérique extérieure du premier rouleau (41) vers les deux extrémités et dans le sens opposé d'un sens de rotation du premier rouleau (41).

4. Unité intérieure de climatisation (2) selon la revendication 1, dans laquelle une matière de soie d'une brosse de soie est collée sur la surface du premier rouleau (241).

5. Unité intérieure de climatisation (2) selon la revendication 1, dans laquelle
le châssis de support (40) inclut
le premier rouleau (41) qui est supporté de sorte qu'il peut librement tourner et forme une première section incurvée du filtre (21),
un second rouleau (42) qui est supporté de sorte qu'il peut librement tourner et forme une seconde section incurvée du filtre (21) la plus éloignée du premier rouleau (41), et
un élément de séparation (44) qui est positionné entre le premier rouleau (41) et le second rouleau (42) et qui est interposé dans un espacement formé par des faces opposées du filtre (21).

6. Unité intérieure de climatisation (2) selon la revendication 5, dans laquelle un tissu à base de textile tissé velours (99) est collé sur la surface d'au moins un du premier rouleau (41) et du second rouleau (42).

7. Unité intérieure de climatisation (2) selon la revendication 1, dans laquelle le filtre (21) comprend une portion de ventilation (211) dont le maillage est tissé dans une taille prédéterminée afin d'enlever la saleté et la poussière et une portion de renfort (212) dont le maillage est plus étroitement tissé que celui de la portion de ventilation (211).

8. Unité intérieure de climatisation (2) selon la revendication 7, dans laquelle la portion de renfort (212) du filtre (21) est au moins tissée sur les deux portions d'extrémité s'étendant parallèlement à une direction de transport du filtre (21).

9. Unité intérieure de climatisation (2) selon la revendication 8, dans laquelle
le châssis de support (240) entre directement en contact avec la portion de renfort (212) du filtre (21) et supporte le filtre (21).

10. Unité intérieure de climatisation (2) selon la revendication 9, dans laquelle le châssis de support (240) inclut une traverse verticale (245a) s'étendant parallèlement à la direction de transport du filtre (21), et
la portion de renfort (212) du filtre (21) est en outre tissée dans une position faisant face à la traverse verticale (245a).

11. Unité intérieure de climatisation (2) selon la revendication 7, dans laquelle la portion de renfort (212) du filtre (21) est tissée perpendiculairement à une direction de transport du filtre (21).

12. Unité de climatisation (2) selon la revendication 1,
dans laquelle le filtre (21) est formé en une forme de boucle en conséquence des deux portions d'extrémité d'une matière de filtre semblable à une bande étant jointes ensemble, et un châssis de support (40) qui devient une orbite de la révolution est inséré à l'intérieur de la forme de boucle.

13. Unité de climatisation (2) selon la revendication 12, dans laquelle les deux portions d'extrémité de la matière de filtre semblable à une bande sont jointes ensemble par couture.

14. Unité de climatisation (2) selon la revendication 12, dans laquelle les deux portions d'extrémité de la matière de filtre semblable à une bande sont jointes ensemble par liaison thermique.
